# EUROPEAN PATENT APPLICATION

(11) **EP 4 825 922 A1**
(43) Date of publication of application: **21.10.2026**
(21) Application number: 24902353.2
(22) Date of filing: 21.10.2024
(51) Int. Cl.: C09C 1/44

(54) **CARBON MATERIAL AND PREPARATION METHOD THEREFOR, WATER-BASED CONDUCTIVE COATING, AND CARBON-COATED ALUMINUM FOIL**

(30) Priority: 11.12.2023 CN 202311692987
(71) Applicant: Guangzhou Human New Material Science And Technology Co., Ltd., Guangzhou, Guangdong 511356 (CN)
(72) Inventor: HUANG, Yanyi, Guangzhou, Guangdong 511356 (CN); HAN, Lei, Guangzhou, Guangdong 511356 (CN); WEI, Xiaofei, Guangzhou, Guangdong 511356 (CN)
(74) Representative: Herrero & Asociados, S.L.
(86) International application number: PCT/CN2024/125961
(87) International publication number: WO 2025/123927

(57) **Abstract**

To address the issue of poor adhesion of existing water-based conductive coatings on the surface of oil-contaminated aluminum foil, the present application provides a carbon material and a preparation method thereof, a water-based conductive coating, and a carbon-coated aluminum foil. The method includes the following steps: mixing water, an alcoholizing agent, and the carbon material uniformly and performing an alcoholization treatment; and modifying the alcoholized carbon material using a surface modifier. The surface modifier includes one or more of hydroxyalkanoates or phosphates to obtain a modified carbon material. In the present application, the alcoholization treatment increases the number of hydroxyl groups on the surface of the carbon material available for grafting. Subsequently, the carbon material is modified with the surface modifier. The modified carbon material possesses an affinity for rolling oil. When applied in a water-based conductive coating, it can work in synergy with the high oil absorption characteristics of the carbon material to break through the "blockade" of the oil film. This allows the polar groups in the coating resin to contact the substrate and generate attractive forces, leading to improved adhesion. In the water-based conductive coating, the filling amount of the carbon material can be further increased to reduce coating resistance.

## Description

The present application claims priority to Chinese Patent Application No. 202311692987.3, filed on December 11, 2023, and entitled "A Carbon Material and Preparation Method Thereof, Water-Based Conductive Coating, and Carbon-Coated Aluminum Foil," the entire disclosure of which is incorporated herein by reference.

### Technical Field

The present application relates to the technical field of lithium-ion batteries, and more particularly, to a carbon material and a preparation method thereof, a water-based conductive coating, and a carbon-coated aluminum foil.

### Background

A water-based conductive coating is a coating that provides both bonding and conductive functions. After film formation, the resulting carbon-coated layer is applied to the surface of a positive current collector of a lithium-ion battery, serving to reduce the internal resistance of the battery, prevent the detachment of positive active materials, and protect the current collector. Therefore, adhesion to the aluminum foil of the current collector, peel strength relative to the positive active material, conductivity after film formation, and electrolyte resistance are the core performance indicators of a water-based conductive coating.

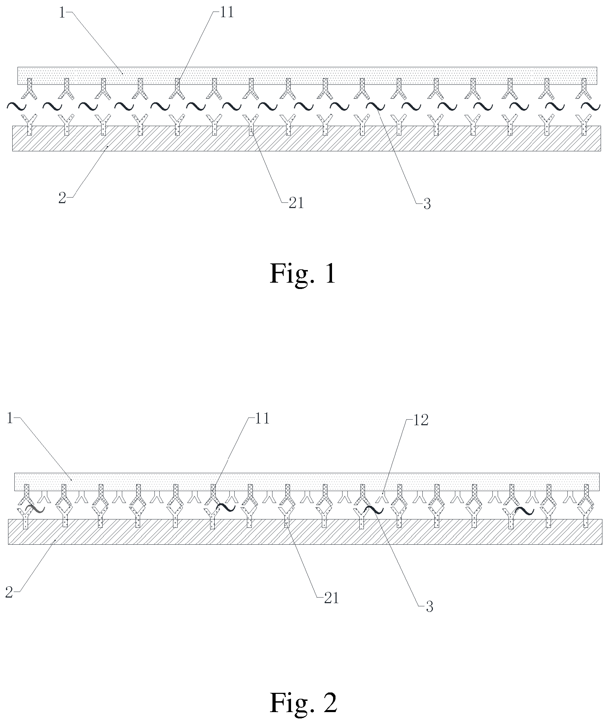

As shown in Fig. 1, regarding adhesion performance, polar groups such as carboxyl groups in the resin component of the water-based conductive coating tend to interact with hydroxyl groups on the surface of the aluminum foil current collector, which theoretically provides good adhesion. However, due to the limitations of the cold-rolling process for aluminum foil current collectors, a large amount of rolling oil often remains on the surface. These rolling oils have very low polarity and form a molecular-level isolating oil film between the carbon-coated layer and the aluminum foil current collector. This creates a barrier that prevents contact between the polar groups of the coating and the aluminum foil, seriously compromising adhesion performance. Currently, common methods involve treating the substrate with corona or baking to temporarily transform the polarity of the residual rolling oil or reduce the residual amount to improve the adhesion of the carbon-coated layer. However, these effects are limited and are particularly ineffective for aluminum foils with heavy oil contamination or current collectors with oil-spotted areas.

Furthermore, as the source of conductivity for the water-based conductive coating, the loading (filling amount) of the carbon material is a critical parameter. Since carbon materials themselves do not possess adhesion to aluminum foil, a higher loading leads to better conductivity but poorer adhesion. This trade-off limits the further improvement of the conductive performance of the carbon-coated layer. Therefore, how to overcome the aforementioned technical problems and defects has become a key issue to be addressed.

### Summary of the Invention

To address the problem of poor adhesion of existing water-based conductive coatings on the surface of aluminum foil, the present application provides a carbon material and a preparation method thereof, a water-based conductive coating, and a carbon-coated aluminum foil.

The technical solutions adopted by the present application to solve the above technical problems are as follows:
A first aspect of the present application provides a method for preparing a carbon material, including the following steps:
performing an alcoholization treatment on a carbon material: mixing water, an alcoholizing agent, and the carbon material uniformly, and performing the alcoholization treatment at 150°C to 180°C for 3 h to 5 h to obtain an alcoholized carbon material; and
performing surface modification on the carbon material: modifying the alcoholized carbon material with a surface modifier, wherein the surface modifier includes one or more of hydroxyalkanoates or phosphates, to obtain a modified carbon material.

Optionally, the step of mixing water, an alcoholizing agent, and the carbon material uniformly includes:
mixing 50 to 75 parts by weight of the water, 26 to 47 parts by weight of the alcoholizing agent, and 1 to 3 parts by weight of the carbon material uniformly.

Optionally, in the step of performing an alcoholization treatment on a carbon material:
the carbon material includes one or more of carbon black, graphite, graphene, or carbon nanotubes; and the alcoholizing agent includes one or more of nitric acid, phosphoric acid, perchloric acid, or sulfuric acid.

Optionally, the step of performing surface modification on the carbon material includes:
dissolving 0.3 to 0.8 parts by weight of the surface modifier in a first solvent, then adding 4.5 to 7 parts by weight of the alcoholized carbon material, stirring and simultaneously performing an ultrasonic treatment for 5 min to 20 min, transferring to a reaction kettle, and reacting at 120°C to 160°C for 8 h to 12 h.

Optionally, in the step of performing surface modification on the carbon material: the first solvent includes one or more of carbon tetrachloride, toluene, xylene, butyl ester, ethylene glycol monobutyl ether, propylene glycol methyl ether, propylene glycol butyl ether, propylene glycol methyl ether acetate, dipropylene glycol methyl ether, or dipropylene glycol methyl ether acetate.

Optionally, the hydroxyalkanoates include one or more of methyl 16-hydroxyhexadecanoate, butyl 16-hydroxyhexadecanoate, ethyl 12-hydroxydodecanoate, methyl 3-hydroxyhexadecanoate, methyl hydroxytetradecanoate, or butyl hydroxytetradecanoate; and the phosphates include one or more of diphenyl phosphate, dixylenyl phosphate, dipentyl phosphate, dibutyl phosphate, dimethyl phosphate, diethyl phosphate, or dipropyl phosphate.

A second aspect of the present application provides a carbon material prepared by the method for preparing a carbon material described above.

A third aspect of the present application provides a water-based conductive coating including, by parts by weight, 35 to 75 parts of water, 15 to 20 parts of a second solvent, 15 to 30 parts of a resin, and 4.5 to 8 parts of the carbon material described above.

Optionally, the second solvent includes one or more of ethanol, ethylene glycol monobutyl ether, or ethylene glycol; and the resin includes one or more of acrylic resin, epoxy resin, polyester resin, or polyurethane resin.

A fourth aspect of the present application provides a carbon-coated aluminum foil including a current collector and a coating layer. The coating layer is coated on at least one surface of the current collector, and the coating layer is formed by coating the water-based conductive coating described above on the at least one surface of the current collector.

According to the method for preparing a carbon material provided by the present application, the present application first performs an alcoholization treatment on a carbon material to increase hydroxyl groups available for grafting on the surface of the carbon material. Subsequently, surface modification is performed on the alcoholized carbon material. Specifically, the method includes: in a solvent phase, under high-temperature and high-pressure conditions, modifying the carbon material using a surface modifier. The surface modifier is a low-polarity small-molecule substance. Since the main components of residual rolling oil are low-polarity substances such as alkanoates, the modified carbon material has a certain affinity for rolling oil. When applied in a water-based conductive coating, the modified carbon material can work in synergy with high oil absorption value characteristics of the carbon material to break the "blockade" of the oil film. This allows polar groups such as carboxyl groups in the coating resin to contact the substrate and generate acting forces, achieving an improvement in adhesion. Based on the improvement in adhesion, the filling amount of the carbon material can be increased during the formulation design process of the water-based conductive coating, achieving an improvement in the conductive performance of the coating.

### Brief Description of Drawings

Fig. 1 is a schematic diagram of a carbon material before treatment of the present application.
Fig. 2 is a schematic diagram of a carbon material after treatment of the present application.
Fig. 3 is a comparison diagram of adhesion between a carbon-coated layer prepared through carbon material modification of the present application and an untreated carbon-coated layer on a surface of a heavy oil-contaminated aluminum foil current collector.

The reference signs in the drawings of the specification are as follows:
1. Carbon-coated layer; 11. Groups providing acting forces in the resin; 12. Groups grafted on the surface of the carbon material; 2. Positive current collector; 21. Groups providing acting forces in the substrate; 3. Residual rolling oil.

### Detailed Description

To make the technical problems, technical solutions, and beneficial effects of the present application more clearly understood, the present application is described in further detail below with reference to the accompanying drawings and embodiments. It should be understood that the specific embodiments described here are only intended to explain the present application and are not intended to limit the present application. Based on the embodiments of the present application, all other embodiments obtained by those of ordinary skill in the art without making creative labor fall within the scope of protection of the present application.

Test methods used in the following embodiments are conventional methods unless otherwise specified. Materials and reagents used are commercially available unless otherwise specified.

In an embodiment, a first aspect of the present application provides a method for preparing a carbon material, including the following steps:
Alcoholization treatment of a carbon material: mixing water, an alcoholizing agent, and the carbon material uniformly, and performing the alcoholization treatment at 150°C to 180°C for 3 h to 5 h to obtain an alcoholized carbon material;

Surface modification of the carbon material: modifying the alcoholized carbon material using a surface modifier, in which the surface modifier includes one or more of hydroxyalkanoates or phosphates to obtain a modified carbon material.

Specifically, the alcoholization treatment of the carbon material includes pretreatment of the carbon material. The pretreatment of the carbon material includes the following steps: performing ultrasonic cleaning of the carbon material in a cleaning agent to remove impurities on a surface of the carbon material, and filtering, washing, and drying to obtain a clean carbon material. A mass ratio of the carbon material to the cleaning agent is 1-10 : 90-99.

In a preferred embodiment, the mass ratio of the carbon material to the cleaning agent is 3-8 : 92-97, such as any mass ratio of 1:99, 2:98, 3:97, 4:96, 5:95, 6:94, 7:93, 8:92, 9:91, or 10:90.

Specifically, 5 parts of the carbon material are placed in an ultrasonic cleaning device, and 95 parts of the cleaning agent are added for cleaning for 10 minutes to remove impurities on the surface of the carbon material. Then, an appropriate filter cloth is selected for suction filtration. After washing with water, the material is dried in a vacuum drying oven at 50°C.

In an embodiment, the cleaning agent is one or more of butanone, acetone, ethyl acetate, ethanol, or butyl acetate.

The cleaning agent can remove impurities on the surface of the carbon material, and a clean carbon material is obtained after filtering, washing, and drying.

Specifically, in the process of the alcoholization treatment of the carbon material, the water is deionized water or distilled water. The specific process includes: mixing the water, the alcoholizing agent, and the carbon material uniformly and then transferring the mixture to a reaction kettle; performing the alcoholization treatment at 150°C to 180°C for 3 h to 5 h; and taking out the carbon material after the alcoholization treatment for centrifugation, cleaning, and vacuum drying in an environment of 40°C to 60°C to obtain the alcoholized carbon material.

In a preferred embodiment, the reaction kettle is a high-pressure reaction kettle. Further, the high-pressure reaction kettle is a high-pressure reaction kettle with a polytetrafluoroethylene (PTFE) lining.

In a preferred embodiment, the temperature for the alcoholization treatment of the water, the alcoholizing agent, and the carbon material is 160°C, and the duration of the alcoholization treatment is 4 h.

In a preferred embodiment, the carbon material after the alcoholization treatment is dried under vacuum at a temperature of 50°C. In an embodiment, the surface modifier includes one or more of hydroxyalkanoates or phosphates. Using low-polarity small-molecule substances such as long-chain hydroxyalkanoates or phosphates to modify the carbon material. Since the main components of residual rolling oil are low-polarity substances such as alkanoates, the modified carbon material has a certain affinity for rolling oil. When applied in a water-based conductive coating, it can work in synergy with the high oil absorption value characteristics of the carbon material to break the "blockade" of the oil film. This allows polar groups such as carboxyl groups in the coating resin to contact the substrate and generate acting forces, achieving an improvement in adhesion. Based on the improvement in adhesion, the filling amount of the carbon material can be increased during the formulation design process of the water-based conductive coating to achieve an improvement in the conductive performance of the coating.

As shown in Fig. 1, polar groups such as carboxyl groups in the resin component of the water-based conductive coating tend to generate acting forces with hydroxyl groups on the surface of the aluminum foil current collector, which theoretically provides good adhesion performance. However, due to the limitations of the cold-rolling process for the aluminum foil current collector, a large amount of rolling oil often remains on the surface. These rolling oils have very low polarity and form a molecular-level isolating oil film between the carbon-coated layer and the aluminum foil current collector. This creates a barrier that prevents contact between the polar groups of the coating and the aluminum foil, seriously affecting the adhesion performance.

Fig. 2 is a schematic diagram of the film-forming effect of the water-based conductive coating of the present application on the surface of a current collector. The present application first performs an alcoholization treatment on the carbon material to increase grafted hydroxyl groups on the surface of the carbon material. Subsequently, surface modification is performed on the alcoholized carbon material. Specifically, the method includes: in a solvent phase, under high-temperature and high-pressure conditions, modifying the carbon material using a surface modifier. The surface modifier is a low-polarity small-molecule substance. Since the main components of residual rolling oil are low-polarity substances such as alkanoates, the modified carbon material has a certain affinity for rolling oil. When applied in a water-based conductive coating, it can work in synergy with the high oil absorption value characteristics of the carbon material to break the "blockade" of the oil film, allowing polar groups such as carboxyl groups in the coating resin to contact the substrate and generate acting forces, thereby achieving an improvement in adhesion.

In an embodiment, the step of "mixing water, an alcoholizing agent, and the carbon material uniformly" includes: mixing 50 to 75 parts by weight of the water, 26 to 47 parts by weight of the alcoholizing agent, and 1 to 3 parts by weight of the carbon material uniformly.

In a preferred embodiment, the water is 60 to 65 parts, such as any single point value of 50, 51, 52, 53, 54, 55, 56, 57, 58, 59, 60, 61, 62, 63, 64, 65, 66, 67, 68, 69, 70, 71, 72, 73, 74, or 75 parts, or a range value consisting of any two point values.

In a preferred embodiment, the alcoholizing agent is 30 to 40 parts, such as any single point value of 26, 27, 28, 29, 30, 31, 32, 33, 34, 35, 36, 37, 38, 39, 40, 41, 42, 43, 44, 45, 46, or 47 parts, or a range value consisting of any two point values.

In a preferred embodiment, the carbon material is 1.5 to 2.5 parts, such as any single point value of 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0 parts, or a range value consisting of any two point values.

The type and amount of the alcoholizing agent used for the activation treatment of the carbon material, as well as the temperature and time conditions of the treatment process, must be matched through experiments. An intense alcoholization process leads to a decrease in the structural degree of the carbon material, which affects conductivity, while an excessively mild alcoholization process cannot generate sufficient reactive active sites. Within the ranges of 50 to 75 parts of the water, 26 to 47 parts of the alcoholizing agent, and 1 to 3 parts of the carbon material, and alcoholization at 150°C to 180°C for 3 h to 5 h, the conductive performance of the carbon material is not affected, and hydroxyl groups available for grafting on the surface of the carbon material can be increased, facilitating subsequent modification of the carbon material.

In an embodiment, the step of "performing an alcoholization treatment on a carbon material" includes: the carbon material includes one or more of carbon black, graphite, graphene, or carbon nanotubes; and the alcoholizing agent includes one or more of nitric acid, phosphoric acid, perchloric acid, or sulfuric acid.

Specifically, the carbon black includes conductive carbon black, and the conductive carbon black includes acetylene black and furnace black.

The graphite includes but is not limited to one or more of natural graphite, artificial graphite, amorphous carbon, carbon-coated graphite, graphite-coated graphite, or resin-coated graphite. The natural graphite can be flake graphite, scaly graphite, earthy graphite, and/or graphite particles obtained by using these graphites as raw materials and subjecting them to treatments such as spheroidization or densification. The artificial graphite can be obtained through graphitization at high temperatures of organic substances such as coal tar pitch, coal-based heavy crude oil, atmospheric residue, petroleum-based heavy crude oil, aromatic hydrocarbons, nitrogen-containing cyclic compounds, sulfur-containing cyclic compounds, polyphenyl, polyvinyl chloride, polyvinyl alcohol, polyacrylonitrile, polyvinyl butyral, natural polymers, polyphenylene sulfide, polyphenylene ether, furfuryl alcohol resin, phenolic resin, or imide resin.

Specifically, nitric acid, phosphoric acid, perchloric acid, and sulfuric acid can all provide graftable hydroxyl groups on the surface of the carbon material, facilitating subsequent modification of the carbon material.

In an embodiment, the step of "performing surface modification on the carbon material" includes: by parts by weight, dissolving 0.3 to 0.8 parts of the surface modifier in a first solvent, then adding 4.5 to 7 parts of the alcoholized carbon material, stirring and simultaneously performing an ultrasonic treatment for 5 min to 20 min, transferring to a reaction kettle, and reacting at 120°C to 160°C for 8 h to 12 h.

In a preferred embodiment, the surface modifier is 0.4 to 0.7 parts, such as any single point value of 0.3, 0.4, 0.5, 0.6, 0.7, or 0.8 parts, or a range value consisting of any two point values.

In a preferred embodiment, the alcoholized carbon material is 5 to 6 parts, such as any single point value of 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, or 7.0 parts, or a range value consisting of any two point values.

Specifically, the process of modifying the alcoholized carbon material with the surface modifier includes: dissolving the surface modifier in the first solvent, then adding the alcoholized carbon material, stirring at 600 rpm and simultaneously performing an ultrasonic treatment for 10 min, transferring to the reaction kettle, reacting at 120°C to 160°C for 8 h to 12 h, taking out the material for filtration and washing with chloroform, and drying in a vacuum drying oven at 80°C to obtain the modified carbon material.

In a preferred embodiment, the heating temperature is 130°C to 150°C, such as any single point value of 120°C, 121°C, 122°C, 123°C, 124°C, 125°C, 126°C, 127°C, 128°C, 129°C, 130°C, 131°C, 132°C, 133°C, 134°C, 135°C, 136°C, 137°C, 138°C, 139°C, 140°C, 141°C, 142°C, 143°C, 144°C, 145°C, 146°C, 147°C, 148°C, 149°C, 150°C, 151°C, 152°C, 153°C, 154°C, 155°C, 156°C, 157°C, 158°C, 159°C, or 160°C, or a range value consisting of any two point values.

In a preferred embodiment, the reaction time is 9 h to 11 h, such as any single point value of 8 h, 8.5 h, 9 h, 9.5 h, 10 h, 10.5 h, 11 h, 11.5 h, or 12 h, or a range value consisting of any two point values.

In an embodiment, in the step of "performing surface modification on the carbon material", the first solvent includes one or more of carbon tetrachloride, toluene, xylene, butyl ester, ethylene glycol monobutyl ether, propylene glycol methyl ether, propylene glycol butyl ether, propylene glycol methyl ether acetate, dipropylene glycol methyl ether, or dipropylene glycol methyl ether acetate.

In an embodiment, the hydroxyalkanoates include one or more of methyl 16-hydroxyhexadecanoate, butyl 16-hydroxyhexadecanoate, ethyl 12-hydroxydodecanoate, methyl 3-hydroxyhexadecanoate, methyl hydroxytetradecanoate, or butyl hydroxytetradecanoate; and the phosphates include one or more of diphenyl phosphate, dixylenyl phosphate, dipentyl phosphate, dibutyl phosphate, dimethyl phosphate, diethyl phosphate, or dipropyl phosphate.

Specifically, methyl 16-hydroxyhexadecanoate, butyl 16-hydroxyhexadecanoate, ethyl 12-hydroxydodecanoate, methyl 3-hydroxyhexadecanoate, methyl hydroxytetradecanoate, and butyl hydroxytetradecanoate are long-chain hydroxyalkanoates. Diphenyl phosphate, dixylenyl phosphate, dipentyl phosphate, dibutyl phosphate, dimethyl phosphate, diethyl phosphate, and dipropyl phosphate are phosphate-based low-polarity small-molecule substances. The carbon material is modified by using the long-chain hydroxyalkanoates and the phosphate-based low-polarity small-molecule substances. Since main components of residual rolling oil are low-polarity substances such as alkanoates, the modified carbon material has a certain affinity for rolling oil. When applied in a water-based conductive coating, the modified carbon material can work in synergy with high oil absorption value characteristics of the carbon material to break the "blockade" of the oil film. This allows polar groups such as carboxyl groups in the coating resin to contact the substrate and generate acting forces, achieving an improvement in adhesion. Based on the improvement in adhesion, the filling amount of the carbon material can be increased during the formulation design process of the water-based conductive coating to achieve an improvement in the conductive performance of the coating.

A second aspect of the present application provides a carbon material prepared by the method for preparing a carbon material described above.

The modified carbon material of the present application has a certain affinity for rolling oil. When applied in a water-based conductive coating, the modified carbon material can work in synergy with the high oil absorption value characteristics of the carbon material to break the "blockade" of the oil film, allowing polar groups such as carboxyl groups in the coating resin to contact the substrate and generate acting forces, thereby achieving an improvement in adhesion.

A third aspect of the present application provides a water-based conductive coating including, by parts by weight, 35 to 75 parts of water, 15 to 20 parts of a second solvent, 15 to 30 parts of a resin, and 4.5 to 8 parts of the carbon material described above. After mixing uniformly, the mixture is dispersed using a sand mill to a fineness of 10 to 25 to obtain the water-based conductive coating.

Preferably, the fineness of the coating is 10 to 25; the viscosity is 30 to 1000 mPa·S; and the solid content of the coating is 5% to 15%.

In a preferred embodiment, the water is 40 to 70 parts, such as any single point value of 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, or 75 parts, or a range value consisting of any two point values.

In a preferred embodiment, the second solvent is 16 to 18 parts, such as any single point value of 15, 16, 17, 18, 19, or 20 parts, or a range value consisting of any two point values.

In a preferred embodiment, the resin is 20 to 25 parts, such as any single point value of 15, 16, 17, 18, 19, 20, 21, 22, 23, 24, 25, 26, 27, 28, 29, or 30 parts, or a range value consisting of any two point values.

In a preferred embodiment, the carbon material is 5 to 8 parts, such as any single point value of 4.5, 5.0, 5.5, 6.0, 6.5, 7.0, 7.5, or 8.0 parts, or a range value consisting of any two point values.

The present application applies the modified carbon material in a water-based conductive coating. Based on the principle of "like dissolves like," the modified carbon material works in synergy with the high oil absorption value characteristics of the carbon material to destroy the oil film, allowing groups such as carboxyl groups in the coating resin to contact the substrate, thereby achieving an improvement in adhesion.

Based on the improvement in adhesion, the filling amount of the carbon material can be increased during the formulation design process of the water-based conductive coating to achieve an improvement in the conductive performance of the coating. For example, when the filling amount of the carbon material increases from 55% to 70%, the resistance decreases by nearly 50%.

In an embodiment, the second solvent includes one or more of ethanol, ethylene glycol monobutyl ether, or ethylene glycol; and the resin includes one or more of acrylic resin, epoxy resin, polyester resin, or polyurethane resin.

A fourth aspect of the present application provides a carbon-coated aluminum foil including a current collector and a coating layer. The coating layer is coated on at least one surface of the current collector, and the coating layer is formed by coating the water-based conductive coating described above on the at least one surface of the current collector.

The coating layer on the surface of the carbon-coated aluminum foil of the present application is formed by coating the water-based conductive coating on the at least one surface of the current collector. The water-based conductive coating of the present application uses the modified carbon material. When applied in the water-based conductive coating, the modified carbon material works in synergy with the high oil absorption value characteristics of the carbon material based on the principle of "like dissolves like" to destroy the oil film. This allows groups such as carboxyl groups in the coating resin to contact the substrate to achieve an improvement in adhesion. Based on the improvement in adhesion, the filling amount of the carbon material can be increased during the formulation design process of the water-based conductive coating to achieve an improvement in the conductive performance of the coating. For example, when the filling amount of the carbon material increases from 55% to 70%, the resistance decreases by nearly 50%. This not only can reduce the substrate treatment cost, but also can improve the construction adaptability of the water-based conductive coating. Further increasing the filling amount of the carbon material to reduce resistance is very significant for the improvement of the overall performance of lithium-ion batteries.

In an embodiment, a thickness of the coating layer of the carbon-coated aluminum foil is 0.3 µm to 2 µm.

In a preferred embodiment, the thickness of the coating layer of the carbon-coated aluminum foil is 0.5 µm to 1.5 µm, such as any single point value of 0.3 µm, 0.4 µm, 0.5 µm, 0.6 µm, 0.7 µm, 0.8 µm, 0.9 µm, 1.0 µm, 1.1 µm, 1.2 µm, 1.3 µm, 1.4 µm, 1.5 µm, 1.6 µm, 1.7 µm, 1.8 µm, 1.9 µm, or 2.0 µm, or a range value consisting of any two point values.

The present application is further described below through embodiments.

### Embodiment 1:

1. Alcoholization treatment of a carbon material:
   1) performing ultrasonic cleaning of 5 parts of the carbon material in 95 parts of butanone for 10 minutes to remove impurities on a surface of the carbon material, then performing suction filtration using an appropriate filter cloth, washing with deionized water, and drying in a vacuum drying oven at 50°C;
   2) mixing 57 parts of deionized water, 40 parts of dilute nitric acid, 1 part of phosphoric acid, and 2 parts of acetylene black in sequence, stirring uniformly and then transferring the mixture to a high-pressure reaction kettle with a PTFE lining, and performing the alcoholization treatment at 160°C for 4 h. The material is taken out for centrifugation, washed with deionized water, and dried under vacuum at 50°C to obtain the alcoholized carbon material.
2. Surface modification of the carbon material:
   First dissolving 0.78 parts of ethyl 12-hydroxydodecanoate in toluene, then adding 7 parts of the alcoholized carbon material, stirring at 600 rpm and simultaneously performing an ultrasonic treatment for 10 min, then transferring the mixture to a reaction kettle, reacting at 120°C for 10 h, taking out the material for filtration and washing with chloroform, and drying in a vacuum drying oven at 80°C to obtain an alkanoate-modified carbon material.
3. Preparation of a positive water-based carbon-coated aluminum foil:
   Mixing 48.89 parts of deionized water, 20 parts of a solvent, 25 parts of a resin, and 6.11 parts of the alkanoate-modified carbon material in sequence, and then dispersing the mixture using a sand mill to a fineness of 15 to obtain a water-based conductive coating with a carbon material filling amount of 55%. The coating is coated on both sides of an aluminum foil current collector and baked in a hot air oven at 125°C for 30 s to obtain a carbon-coated aluminum foil with a single-sided coating thickness of 0.5 µm, labeled as S1.

### Embodiment 2

Embodiment 2 is used to illustrate a carbon material and a preparation method thereof, a water-based conductive coating, and a carbon-coated aluminum foil disclosed in the present application, including most of the steps in Embodiment 1, with the difference being:
Preparation of a positive water-based carbon-coated aluminum foil:
Mixing 51.12 parts of deionized water, 20 parts of a solvent, 22.22 parts of a resin, and 6.66 parts of the alkanoate-modified carbon material in sequence uniformly, and then dispersing the mixture using a sand mill to a fineness of 15 to obtain a water-based conductive coating with a carbon material filling amount of 60%. The coating is coated on both sides of an aluminum foil current collector and baked in a hot air oven at 125°C for 30 s to obtain a carbon-coated aluminum foil with a single-sided coating thickness of 0.5 µm, labeled as S2.

### Embodiment 3

Embodiment 3 is used to illustrate a carbon material and a preparation method thereof, a water-based conductive coating, and a carbon-coated aluminum foil disclosed in the present application, including most of the steps in Embodiment 1, with the difference being:
Preparation of a positive water-based carbon-coated aluminum foil:
Mixing 53.34 parts of deionized water, 20 parts of a solvent, 19.44 parts of a resin, and 7.22 parts of the alkanoate-modified carbon material in sequence uniformly, and then dispersing the mixture using a sand mill to a fineness of 15 to obtain a water-based conductive coating with a carbon material filling amount of 65%. The coating is coated on both sides of an aluminum foil current collector and baked in a hot air oven at 125°C for 30 s to obtain a carbon-coated aluminum foil with a single-sided coating thickness of 0.5 µm, labeled as S3.

### Embodiment 4

Embodiment 4 is used to illustrate a carbon material and a preparation method thereof, a water-based conductive coating, and a carbon-coated aluminum foil disclosed in the present application, including most of the steps in Embodiment 1, with the difference being:
Preparation of a positive water-based carbon-coated aluminum foil:
Mixing 55.55 parts of deionized water, 20 parts of a solvent, 16.67 parts of a resin, and 7.78 parts of the alkanoate-modified carbon material in sequence uniformly, and then dispersing the mixture using a sand mill to a fineness of 15 to obtain a water-based conductive coating with a carbon material filling amount of 70%. The coating is coated on both sides of an aluminum foil current collector and baked in a hot air oven at 125°C for 30 s to obtain a carbon-coated aluminum foil with a single-sided coating thickness of 0.5 µm, labeled as S4.

### Comparative Example 1

Comparative Example 1 is used to illustrate a carbon material and a preparation method thereof, a water-based conductive coating, and a carbon-coated aluminum foil disclosed in the present application, including most of the steps in Embodiment 1, with the difference being:
not performing the alcoholization treatment of the carbon material; preparing a water-based conductive coating with a carbon material filling amount of 55%; and obtaining a carbon-coated aluminum foil after baking, labeled as X1.

### Comparative Example 2

Comparative Example 2 is used to illustrate a carbon material and a preparation method thereof, a water-based conductive coating, and a carbon-coated aluminum foil disclosed in the present application, including most of the steps in Embodiment 1, with the difference being:
not performing the alcoholization treatment of the carbon material; preparing a water-based conductive coating with a carbon material filling amount of 70%; and obtaining a carbon-coated aluminum foil after baking, labeled as X2.

### Comparative Example 3

Comparative Example 3 is used to illustrate a carbon material and a preparation method thereof, a water-based conductive coating, and a carbon-coated aluminum foil disclosed in the present application, including most of the steps in Embodiment 1, with the difference being:
not performing the surface modification of the carbon material; preparing a water-based conductive coating with a carbon material filling amount of 55%; and obtaining a carbon-coated aluminum foil after baking, labeled as X3.

### Comparative Example 4

Comparative Example 4 is used to illustrate a carbon material and a preparation method thereof, a water-based conductive coating, and a carbon-coated aluminum foil disclosed in the present application, including most of the steps in Embodiment 1, with the difference being:
not performing the surface modification of the carbon material; preparing a water-based conductive coating with a carbon material filling amount of 70%; and obtaining a carbon-coated aluminum foil after baking, labeled as X4.

### Comparative Example 5

Comparative Example 5 is used to illustrate a carbon material and a preparation method thereof, a water-based conductive coating, and a carbon-coated aluminum foil disclosed in the present application, including most of the steps in Embodiment 1, with the difference being:
not performing any treatment on the carbon material; preparing a water-based conductive coating with a carbon material filling amount of 55%; and obtaining a carbon-coated aluminum foil after baking, labeled as X5.

### Comparative Example 6

Comparative Example 6 is used to illustrate a carbon material and a preparation method thereof, a water-based conductive coating, and a carbon-coated aluminum foil disclosed in the present application, including most of the steps in Embodiment 1, with the difference being:
not performing any treatment on the carbon material; preparing a water-based conductive coating with a carbon material filling amount of 70%; and obtaining a carbon-coated aluminum foil after baking, labeled as X6.

### Performance Testing:

### (I) Adhesion Test:

The carbon-coated aluminum foils prepared in Embodiments 1-4 and Comparative Examples 1-6 were evaluated for the degree of detachment using 3M tape peeling.

Test Method: With the coating side of the carbon-coated aluminum foil facing up, 3M tape is adhered to the coating. The 3M tape on the coating is flattened with fingers to expel air bubbles between the 3M tape and the coating, so as to make the 3M tape adhere to the coating to the maximum extent. The 3M tape is pulled up vertically from the bottom end, and the degree of coating detachment is recorded.

### (II) Conductivity Test:

The resistance of the carbon-coated aluminum foils prepared in Embodiments 1-4 and Comparative Examples 1-6 was tested respectively.

The test equipment is a diaphragm resistance test system, Chuanyuan Technology TT-ACCF-G2A. The test pressure is 23 MPa, and the pressure holding time is 5 seconds. Three values are tested for each carbon-coated aluminum foil, and the average value is taken as the result.

The test results obtained from Embodiments 1-4 and Comparative Examples 1-6 are entered into Table 1.

**Table 1**

| Carbon-coated layer | Adhesion | Resistance (mΩ) |
|---|---|---|
| S1 | OK | 3.59 |
| S2 | OK | 3.11 |
| S3 | OK | 2.44 |
| S4 | OK | 1.82 |
| X1 | Small amount | 3.42 |
| X2 | Large amount | 1.8 |
| X3 | Complete detachment | 3.49 |
| X4 | Complete detachment | 1.82 |
| X5 | Complete detachment | 3.38 |
| X6 | Complete detachment | 1.8 |

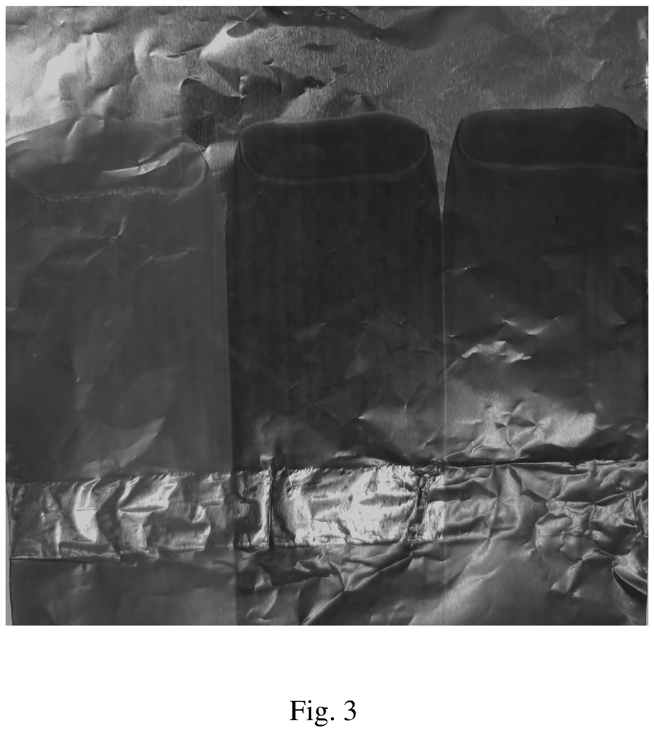

Some adhesion test results are shown in Fig. 3; from left to right are X5, X6, and S4, respectively.

From the test results in Table 1, it can be seen that Embodiments 1-4 of the present application use small-molecule materials such as long-chain alkanoates or phosphates, which have structures similar to the residual rolling oil on the substrate, as grafts, and achieve the modification of the surface of the carbon material through a high-pressure solvothermal reaction. When the modified carbon material is applied in a water-based conductive coating, it works in synergy with the high oil absorption value characteristics of the carbon material according to the principle of "like dissolves like" to destroy the oil film. This allows groups such as carboxyl groups in the coating resin to contact the substrate to achieve an improvement in adhesion. Fig. 1 and Fig. 2 are analysis of the adhesion improvement mechanism. Fig. 3 shows the adhesion status of the coating before treatment (X6) and after treatment (S4) of the carbon material, and it can be seen that the adhesion is significantly improved.

Based on the improvement in adhesion, the filling amount of the carbon material can be increased during the formulation design process of the water-based conductive coating to achieve an improvement in the conductive performance of the coating. For example, when the filling amount of the carbon material increases from 55% to 70%, the resistance decreases by nearly 50%.

The above are only preferred embodiments of the present application and are not intended to limit the present application. Any modifications, equivalent substitutions, and improvements made within the spirit and principles of the present application should be included within the scope of protection of the present application.

## Claims

1. A method for preparing a carbon material, comprising:
performing an alcoholization treatment on a carbon material: mixing water, an alcoholizing agent, and the carbon material uniformly, and performing the alcoholization treatment at 150°C to 180°C for 3 h to 5 h to obtain an alcoholized carbon material; and
performing surface modification on the carbon material: modifying the alcoholized carbon material with a surface modifier, wherein the surface modifier comprises one or more of hydroxyalkanoates or phosphates, to obtain a modified carbon material.

2. The method for preparing a carbon material of claim 1, wherein the step of mixing water, an alcoholizing agent, and the carbon material uniformly comprises:
mixing 50 to 75 parts by weight of the water, 26 to 47 parts by weight of the alcoholizing agent, and 1 to 3 parts by weight of the carbon material uniformly.

3. The method for preparing a carbon material of claim 1, wherein in the step of performing an alcoholization treatment on a carbon material:
the carbon material comprises one or more of carbon black, graphite, graphene, or carbon nanotubes; and the alcoholizing agent comprises one or more of nitric acid, phosphoric acid, perchloric acid, or sulfuric acid.

4. The method for preparing a carbon material of claim 1, wherein the step of performing surface modification on the carbon material comprises:
dissolving 0.3 to 0.8 parts by weight of the surface modifier in a first solvent, then adding 4.5 to 7 parts by weight of the alcoholized carbon material, stirring and simultaneously performing an ultrasonic treatment for 5 min to 20 min, transferring to a reaction kettle, and reacting at 120°C to 160°C for 8 h to 12 h.

5. The method for preparing a carbon material of claim 4, wherein in the step of performing surface modification on the carbon material: the first solvent comprises one or more of carbon tetrachloride, toluene, xylene, butyl ester, ethylene glycol monobutyl ether, propylene glycol methyl ether, propylene glycol butyl ether, propylene glycol methyl ether acetate, dipropylene glycol methyl ether, or dipropylene glycol methyl ether acetate.

6. The method for preparing a carbon material of claim 1, wherein: the hydroxyalkanoates comprise one or more of methyl 16-hydroxyhexadecanoate, butyl 16-hydroxyhexadecanoate, ethyl 12-hydroxydodecanoate, methyl 3-hydroxyhexadecanoate, methyl hydroxytetradecanoate, or butyl hydroxytetradecanoate; and the phosphates comprise one or more of diphenyl phosphate, dixylenyl phosphate, dipentyl phosphate, dibutyl phosphate, dimethyl phosphate, diethyl phosphate, or dipropyl phosphate.

7. A carbon material, prepared by the method for preparing a carbon material of any one of claims 1 to 6.

8. A water-based conductive coating, comprising, by parts by weight: 35 to 75 parts of water, 15 to 20 parts of a second solvent, 15 to 30 parts of a resin, and 4.5 to 8 parts of the carbon material of claim 7.

9. The water-based conductive coating of claim 8, wherein: the second solvent comprises one or more of ethanol, ethylene glycol monobutyl ether, or ethylene glycol; and the resin comprises one or more of acrylic resin, epoxy resin, polyester resin, or polyurethane resin.

10. A carbon-coated aluminum foil, comprising: a current collector and a coating layer, wherein the coating layer is coated on at least one surface of the current collector, and the coating layer is formed by coating the water-based conductive coating of any one of claims 8 to 9 on the at least one surface of the current collector.
